# EUROPEAN PATENT APPLICATION

(11) **EP 2 826 759 A1**
(43) Date of publication of application: **21.01.2015**
(21) Application number: 13760629.9
(22) Date of filing: 14.03.2013
(51) Int. Cl.: C04B 24/26, C04B 24/12, C08F 220/04, C08F 220/28, C08F 290/06, C04B 103/40

(54) **GYPSUM DISPERSANT**

(30) Priority: 14.03.2012 JP 2012058029
(71) Applicant: Toho Chemical Industry Co., Ltd., Tokyo 104-0044 (JP); Yoshino Gypsum Co., Ltd., Chiyoda-ku Tokyo 100-0005 (JP)
(72) Inventor: IKEDA, Akira, Sodegaura-shi Chiba 299-0266 (JP); KOSHISAKA, Seiichi, Sodegaura-shi Chiba 299-0266 (JP); SATO, Katsutoshi, Sodegaura-shi Chiba 299-0266 (JP)
(74) Representative: Hoffmann Eitle
(86) International application number: PCT/JP2013/057226
(87) International publication number: WO 2013/137400

(57) **Abstract**

There is provided a gypsum dispersant and a gypsum additive that improve the fluidity of gypsum slurry even if gypsum raw materials used are different in quality and that do not induce delay of curing of gypsum slurry. A gypsum dispersant, characterized by comprising: (A) a polycarboxylic acid polymer; and (B) a polyamide polyamine obtained by a reaction of a polyalkylene polyamine and a dibasic acid as essential components, and/or an alkylene oxide adduct of the polyamide polyamine.

## Description

### TECHNICAL FIELD

The present invention relates to a gypsum dispersant that is added when a variety of gypsum molded products such as gypsum boards are manufactured, in order to improve the fluidity of gypsum slurry composed of gypsum and water.

### BACKGROUND ART

Gypsum boards have been widely used mainly as interior materials of buildings, because of their excellent fireproof, sound insulating, and heat insulating properties, as well as their availability at low prices. Gypsum boards are manufactured generally by a pouring method. In the method, gypsum slurry that is composed of calcined gypsum, water, a dispersant, and other additive(s), is stirred and kneaded with an expanded foam in a mixing machine; the mixture is poured between the sheets of base paper to be sandwiched; and the thickness and the width are adjusted, and then cured, cut, and dried to obtain a gypsum board. Different types of gypsum boards are available, such as normal boards, hard boards, reinforced boards, and decorative boards. Although types of additives, mixing amounts, addition of reinforced materials, and the like may be changed depending on characteristics required for each of the boards, the boards can be manufactured by the same method.

When the gypsum slurry is manufactured, a dispersant is used in order to enhance ductility of a gypsum board to base paper, as well as to reduce a unit water amount in the manufacture of slurry, which enhances drying efficiency of the slurry, and to increase the density of a molded board so that a high strength board is obtained.

Formaldehyde-based compounds such as a naphthalenesulfonate formaldehyde condensate, a melaminesulfonate formaldehyde condensate, and a formaldehyde condensate of a bisphenol and aminobenzenesulfonic acid have been conventionally and widely used as dispersants for gypsum (see Patent Documents 1 and 2).

Patent Document 3 discloses a self leveling aqueous gypsum composition having a high flow value and an excellent self leveling property, which is prepared by adding a polycarboxylic acid dispersant to an aqueous gypsum composition.

Patent Document 4 discloses a gypsum dispersant characterized by comprising a water soluble amphoteric polymer compound as a main component. The water soluble amphoteric polymer compound contains a structural unit having a nitrogen atom selected from an amido group, an amino group, and an imino group; a structural unit having a carboxylic acid group; and a structural unit having a polyalkylene glycol group, and the compound is obtained by polymerization. However, due to impurities contained in gypsum raw materials, the effects of the dispersant may not be stably exerted, and thus an improvement has been needed.

### Prior Art Documents

### Patent Documents

Patent Document 1: Japanese Patent No. 3067811 (JP 3067811 B2)
Patent Document 2: Japanese Patent No. 3733821 (JP 3733821 B2)
Patent Document 3: Japanese Examined Patent Application Publication No. S64-1426 (JP S64-1426 B)
Patent Document 4: Japanese Patent Application Publication No. 2007-320786 (JP 2007-320786 A)

### SUMMARY OF THE INVENTION

### Problem to be Solved by the Invention

Although the above-mentioned conventional polycarboxylic acid dispersants show excellent dispersibility for gypsum slurry by properly selecting the conditions for use, such as pH, it also causes delay of curing, which results in a decrease in productivity of gypsum boards.

There are a wide variety of gypsum raw materials such as imported natural gypsum, flue gas desulfurization gypsum emitted from desulfurization devices used in power plants or smelters, by-product gypsum such as phosphoric acid gypsum and fluorogypsum, and recycled gypsum separated and recovered from waste gypsum boards. They are blended at factory original ratios for use in order to reduce transportation costs and the like. Accordingly, impurities and the like contained in gypsum are different between the factories, and thus the properties of a gypsum water reducing agent may not be fully exercised.

In view of the above-described disadvantages such as a problem to be solved by the present invention, the present invention provides a gypsum dispersant and a gypsum additive that improve the fluidity of gypsum slurry even if gypsum raw materials used are different in quality and that do not induce delay of curing of gypsum slurry.

### Means for Solving the Problem

As a result of intensive study to solve the above problem, the inventors of the present invention have found the present invention.

Specifically, the present invention relates to a gypsum dispersant, characterized by comprising: (A) a polycarboxylic acid polymer; and (B) a polyamide polyamine obtained by a reaction of a polyalkylene polyamine and a dibasic acid as essential components, and/or an alkylene oxide adduct of the polyamide polyamine.

The present invention also relates to a gypsum additive comprising: a polyamide polyamine obtained by a reaction of a polyalkylene polyamine and a dibasic acid as essential components, and/or an alkylene oxide adduct of the polyamide polyamine, which is mixed in order to improve the fluidity of gypsum slurry.

### Effects of the Invention

(A) the polycarboxylic acid polymer is used in combination with (B) the polyamide polyamine obtained by condensing a polyalkylene polyamine and a dibasic acid, and/or an alkylene oxide adduct of the polyamide polyamine, in a gypsum dispersant of the present invention. Because of this, even if gypsum raw materials used are different in quality, sufficient fluidity can be stably imparted regardless of the types.

Furthermore, by adding the gypsum dispersant to gypsum slurry, gypsum boards can be manufactured without decreasing productivity.

### MODES FOR CARRYING OUT THE INVENTION

Hereinafter, the present invention will be explained in detail.

As (A) the polycarboxylic acid polymer, a polymer having a structural unit derived from (a) a polyalkylene glycol unsaturated monomer and a structural unit derived from (b) an unsaturated carboxylic acid monomer can preferably be used.

The structural unit derived from (a) the polyalkylene glycol unsaturated monomer can be represented by General Formula (1): 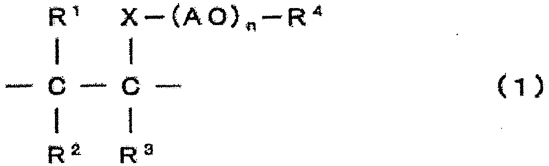 (where each of R¹, R², R³, and R⁴ is independently a hydrogen atom or a C₁₋₂₂ hydrocarbon group, X is -COO- or -(CH₂)ₐO-, a is an integer of 1 to 20, AO is a C₂₋₄ alkylene oxy group, and n is the number of moles of added alkylene oxy groups and is 1 to 200).

In Formula (1), each of R¹, R², R³, and R⁴ is independently a hydrogen atom or a C₁₋₂₂ hydrocarbon group, preferably a hydrogen atom or a C₁₋₈ alkyl group, and more preferably a hydrogen atom, a methyl group, an ethyl group, a propyl group, or a butyl group.

AO is a C₂₋₄ alkylene oxy group, and specific examples thereof include an ethylene oxy group, a propylene oxy group, and a butylene oxy group. When AO is composed of two or more types of alkylene oxy groups, these alkylene oxy groups can be any of a block addition or a random addition.

n is the number of moles of added alkylene oxy groups and is 1 to 200, preferably 5 to 120, more preferably 10 to 100, and still more preferably 40 to 100.

The followings are specific examples of (a) the polyalkylene glycol unsaturated monomer.

Alkoxy poly alkylene glycol mono(meth)acrylates such as methoxy polyethylene glycol mono(meth)acrylate, methoxy{polyethylene glycol(poly)propylene glycol}mono(meth)acrylate, ethoxy polyethylene glycol mono(meth)acrylate, ethoxy{polyethylene glycol(poly)propylene glycol}mono(meth)acrylate, propoxy polyethylene glycol mono(meth)acrylate, propoxy{polyethylene glycol(poly)propylene glycol}mono(meth)acrylate, butoxy polyethylene glycol mono(meth)acrylate, and butoxy{polyethylene glycol(poly)propylene glycol}mono(meth)acrylate; and unsaturated alcohol polyalkylene glycol adducts such as a vinylalcohol alkylene oxide adduct, a (meth)allyl alcohol alkylene oxide adduct, a 3-buten-1-ol alkylene oxide adduct, an isoprene alcohol(3-methyl-3-buten-1-ol)alkylene oxide adduct, a 3-methyl-2-buten-1-ol alkylene oxide adduct, a 2-methyl-3-buten-2-ol alkylene oxide adduct, a 2-methyl-2-buten-1-ol alkylene oxide adduct, and a 2-methyl-3-buten-1-ol alkylene oxide adduct. Note that, in the present invention, (meth)acrylate refers to both acrylate and methacrylate, and (meth)allyl alcohol refers to both allyl alcohol and methallyl alcohol.

Specific examples of (b) the unsaturated carboxylic acid monomer include acrylic acid, methacrylic acid, maleic acid, fumaric acid, itaconic acid, and an unsaturated fatty acid, as well as acid anhydrides thereof, such as maleic anhydride. Among them, methacrylic acid is particularly preferable.

In (A) the polycarboxylic acid polymer, examples of (c) a copolymerizable monomer other than the above-mentioned monomers (a) and (b), include the following known monomers; (1) (non)aqueous monomers: methyl (meth)acrylate, ethyl (meth)acrylate, butyl (meth)acrylate, styrene, and the like; (2) anion monomers: vinyl sulfonates, styrene sulfonates, methacrylic acid phosphoesters, and the like; (3) amide monomers: acrylamide, an alkylene oxide adduct of acrylamide, and the like; (4) polyamide polyamine monomers: a compound of a condensate of the polyamide polyamine to be described later and (meth)acrylic acid, which contains an alkylene oxide if desired.

A copolymerization ratio of the monomers (a) to (c) is preferably (a) : (b) : (c) = 50 to 95 : 5 to 50 : 0 to 40, and more preferably (a) : (b) : (c) = 70 to 90 : 10 to 30 : 0 to 20, based on mass.

A method of manufacturing (A) the polycarboxylic acid polymer is not particularly limited, and known polymerization methods, such as solution polymerization and block polymerization that utilize polymerization initiators can be used. Although a molecular weight is also not particularly limited, it is preferably within a range of 5,000 to 100,000 as a weight-average molecular weight (determined by gel permeation chromatography, in terms of polyethylene glycol) to achieve good dispersibility.
Preferably, (A) the polycarboxylic acid polymer is contained in a gypsum dispersant of the present invention as a partially or fully neutralized form, which has been neutralized with a neutralizer, such as lithium hydroxide, potassium hydroxide, sodium hydroxide, ammonia, an alkylamine, or an organic amine.

(B) the polyamide polyamine obtained by the reaction of a polyalkylene polyamine and a dibasic acid as essential components, and/or an alkylene oxide adduct of the polyamide polyamine will be explained.

Examples of the polyalkylene polyamine include diethylene triamine, triethylene tetramine, tetraethylene pentamine, pentaethylene hexamine, dipropylene triamine, tripropylene tetramine, tetrapropylene pentamine, and other high molecular weight polyalkylene polyamine mixtures.

Examples of the dibasic acid include a dibasic acid having malonic acid, succinic acid, fumaric acid, maleic acid, glutaric acid, adipic acid, pimelic acid, phthalic acid, azelaic acid, or sebacic acid as a basic backbone; and alkyl esters and dibasic acid halides of these dibasic acids.

The reaction molar ratio of the polyalkylene polyamine and the dibasic acid, which compose the polyamide polyamine, is preferably within a range of 2 : 1 to 21 : 20. When the reaction is conducted at a molar ratio within this range, the polyamide polyamine will have a molecular weight of suitable viscosity, and thus good dispersibility can be obtained. The weight-average molecular weight of polyamide polyamine is usually 500 to 100,000, preferably 1,000 to 50,000, more preferably 1,000 to 30,000, and particularly preferably 1,000 to 10,000.

As the component (B), a polyamide polyamine to which an alkylene oxide is added (alkylene oxide adduct) can also be used. In this case, the type of polyamide polyamines that can be used is the same as that described above.

An alkylene oxide used for the polyamide polyamine to which an alkylene oxide is added is a C₂₋₄ alkylene oxide. The C₂₋₄ alkylene oxide is ethylene oxide, propylene oxide, or butylene oxide. One type of these alkylene oxides may be used, or two or more types of them may be used in combination. When two or more types of alkylene oxides are added, the form of addition may be either block or random.

The polyamide polyamine to which an alkylene oxide is added can be obtained by adding an alkylene oxide directly to the polyamide polyamine, or can be obtained in a water solution.

The amount of the alkylene oxide is preferably 0 to 8 mol to 1 equivalent of amino residues (an amino group, an imino group, and an amide group) of the polyamide polyamine.

The component (B) also includes a mixture of the polyamide polyamine and the polyamide polyamine to which an alkylene oxide is added.

Although the ratio of the component (A) and the component (B) is not particularly limited, it is preferably (A): (B) = 1 : 1 to 30 : 1, and more preferably 2 : 1 to 20 : 1, as a mass ratio.

Although the mechanism how fluidity is constantly imparted to gypsum slurry using a gypsum dispersant of the present invention is unknown, it is supposed that the component (B) selectively adsorb to impurities that are in gypsum raw materials and inhibit function of the dispersant. Accordingly, the component (B) can be used as a gypsum additive, together with a dispersant other than the component (A), such as lignin sulfonate, a naphthalenesulfonic acid formalin high condensated salt, a melamine sulfonic acid formalin high condensated salt, a polystyrene sulfonate, and an aqueous vinyl copolymer.

To gypsum raw materials, usually 0.01% by mass to 5% by mass (the solid mass ratio of the dispersant) of a gypsum dispersant of the present invention may be added for use. Although a variety of methods are used for addition of the dispersant, generally the dispersant is added in water to be diluted firstly, and then gypsum is kneaded with the water to prepare gypsum slurry. The component (A) and the component (B) can be mixed prior to addition, or each of them can be added individually without mixing. When each of them is added individually, any order of addition can be taken.

Gypsum includes anhydrous gypsum, gypsum hemihydrate, and gypsum dihydrate. As the gypsum raw materials, natural gypsum, or chemical gypsum such as neutralized gypsum and by-product gypsum can be used alone, or two or more of them can be used upon mixing. Main examples of the chemical gypsum include phosphoric acid gypsum, fluorogypsum, titanium gypsum, and flue gas desulfurization gypsum. The gypsum raw materials may contain recycled gypsum. The recycled gypsum may be a recycled gypsum collected from waste gypsum boards generated in gypsum board manufacturers, or a recycled gypsum collected from waste gypsum boards or the like generated upon construction or scrapping. A gypsum dispersant of the present invention can suitably be used for any of such gypsum raw materials, and shows excellent effects even for gypsum blended at various ratios.

Examples of an additive that is used for gypsum boards and the like in addition to a gypsum dispersant of the present invention, include a universal water reducing agent, a foaming agent such as an alkyl sulfate, an alkyl ether sulfate, and an alkyl sulfonate, an antifoaming agent, a foam stabilizer, a curing control agent, a water repellant, an adhesive, and a retardant. In addition, glass fiber, carbon fiber, waste paper, virgin pulp, and the like may be added as reinforced fiber, or gypsum boards may be prepared with a lightweight aggregate, such as pearlite and foamed steel.

A dispersant of the present invention can easily be applied to gypsum plaster that is used in finishing coat.

### Examples

The present invention will be explained according to specific examples; however, the present invention is not limited to these examples. Unless otherwise noted, copolymerization ratios and mixing ratios are based on mass.

### [(A) Polycarboxylic acid Polymer]

(A) a polycarboxylic acid polymer used in Examples herein will be explained below.
   <A1> A copolymerized material of (a1) a methacrylic acid ester of polyethylene glycol (46 mol) monomethylether and (b1) a methacrylic acid ((a1): (b1) = 9 : 1; the weight-average molecular weight was 25,000).
   <A2> A copolymerized material of (a2) a methacrylic acid ester of polyethylene glycol (90 mol) monomethylether, (b1) a methacrylic acid, and (c1) a polyamide polyamine monomer ((a2) : (b1) : (c1) = 77 : 13 : 10; the weight-average molecular weight was 44,000; the copolymer disclosed in Example 2 in Japanese Patent Application Publication No. 2007-320786).
   <A3> A copolymerized material of (a3) a 3-methyl-3-buten-1-ol 50EO2PO adduct and (b2) fumaric acid ((a3): (b2) = 8 : 2; the weight-average molecular weight was 30,000).

### [(B) Manufacture of Polyamide Polyamine]

(B) polyamide polyamines used in Examples herein (B1 to B8) were manufactured by the procedure described below.

### <Measuring Condition of Molecular Weight>

Column: OHpacSB-806MHQ, OHpacSB-804HQ, OHpacSB-803HQ (manufactured by Showa Denko K.K.)
Eluent: 0.5M acetic acid and sodium nitrate aqueous solution
Detector: Differential refractometer
Standard Curve: Based on pullulan

### Synthesis Example 1

103 g of diethylenetriamine was placed in a glass reaction container equipped with a thermometer, a nitrogen introduction tube, an agitator, and a condenser having a water measuring tube, and the resultant mixture was stirred while nitrogen was introduced into the liquid. As stirring, 121 g of adipic acid was added (the molar ratio of polyalkylene polyamine/dibasic acid was 6 mol/5 mol), heated to raise the temperature to 150°C, and the reaction was continued for five hours at the same temperature while drained water was removed. After the reaction was completed, 138 g of ion exchanged water was added to obtain 345 g of a 60% by mass polyamide polyamine aqueous solution (Compound B1; the weight-average molecular weight was 1,300).

### Synthesis Example 2

The same procedure was conducted until the amidation reaction of Compound B1 was completed, and then 230 g of ion exchanged water was added and stirred for 30 minutes. The content was transferred into a pressure-resistant glass container equipped with a nitrogen introduction tube and an ethylene oxide introduction tube. After sufficiently substituted by nitrogen, the container was heated to raise the temperature to 60°C. 146 g of ethylene oxide was gradually blown into the container as the temperature was maintained at 60°C to 70°C, and then the content was matured for one hour at the same temperature to obtain 570 g of a 60% by mass polyethylene oxide added polyamide polyamine aqueous solution (Compound B2; the weight-average molecular weight was 2,000).

### Synthesis Example 3

134 g of pentaethylenehexamine was placed in a glass reaction container equipped with a thermometer, a nitrogen introduction tube, an agitator, and a condenser having a water measuring tube, and the resultant mixture was stirred while nitrogen was introduced into the liquid. As stirring, 50 g of adipic acid was added (the molar ratio of polyalkylene polyamine/dibasic acid was 5 mol/3 mol), heated to raise the temperature to 150°C, and the reaction was continued for five hours at the same temperature while drained water was removed. After the reaction was completed, 115 g of ion exchanged water was added to obtain 288 g of a 60% by mass polyamide polyamine aqueous solution (Compound B3; the weight-average molecular weight was 1,500).

### Synthesis Example 4

The same procedure was conducted until the amidation reaction of Compound B3 was completed, and then 197 g of ion exchanged water was added and stirred for 30 minutes. The content was transferred into a pressure-resistant glass container equipped with a nitrogen introduction tube and an ethylene oxide introduction tube. After sufficiently substituted by nitrogen, the container was heated to raise the temperature to 60°C. 122 g of ethylene oxide was gradually blown into the container as the temperature was maintained at 60°C to 70°C, and then the content was matured for one hour at the same temperature to obtain 504 g of a 60% by mass polyethylene oxide added polyamide polyamine aqueous solution (Compound B4; the weight-average molecular weight was 1,900).

### Synthesis Example 5

128 g of tetraethylenepentamine was placed in a glass reaction container equipped with a thermometer, a nitrogen introduction tube, an agitator, and a condenser having a water measuring tube, and the resultant mixture was stirred while nitrogen was introduced into the liquid. As stirring, 89 g of adipic acid was added (the molar ratio of polyalkylene polyamine/dibasic acid was 10 mol/9 mol), heated to raise the temperature to 150°C, and the reaction was continued for five hours at the same temperature while drained water was removed. After the reaction was completed, 131 g of ion exchanged water was added to obtain 328 g of a 60% by mass polyamide polyamine aqueous solution (Compound B5; the weight-average molecular weight was 2,900).

### Synthesis Example 6

The same procedure was conducted until the amidation reaction of Compound B5 was completed, and then 330 g of ion exchanged water was added and stirred for 30 minutes. The content was transferred into a pressure-resistant glass container equipped with a nitrogen introduction tube and an ethylene oxide introduction tube. After sufficiently substituted by nitrogen, the container was heated to raise the temperature to 60°C. 300 g of ethylene oxide was gradually blown into the container as the temperature was maintained at 60°C to 70°C, and then the content was matured for one hour at the same temperature to obtain 850 g of a 60% by mass polyethylene oxide added polyamide polyamine aqueous solution (Compound B6; the weight-average molecular weight was 4,800).

### Synthesis Example 7

199 g of a polyalkylene polyamine (manufactured by Tosoh Corporation, the product name: Poly-8) was placed in a glass reaction container equipped with a thermometer, a nitrogen introduction tube, an agitator, and a condenser having a water measuring tube, and the resultant mixture was stirred while nitrogen was introduced into the liquid. As stirring, 68 g of adipic acid was added (the molar ratio of polyalkylene polyamine/dibasic acid was 4 mol/3 mol), heated to raise the temperature to 150°C, and the reaction was continued for five hours at the same temperature while drained water was removed. After the reaction was completed, 125 g of ion exchanged water was added to obtain 412 g of a 60% by mass polyamide polyamine aqueous solution (Compound B7; the weight-average molecular weight was 2,200).

### Synthesis Example 8

The same procedure was conducted until the amidation reaction of Compound B7 was completed, and then 290 g of ion exchanged water was added and stirred for 30 minutes. The content was transferred into a pressure-resistant glass container equipped with a nitrogen introduction tube and an ethylene oxide introduction tube. After sufficiently substituted by nitrogen, the container was heated to raise the temperature to 60°C. 180 g of ethylene oxide was gradually blown into the container as the temperature was maintained at 60°C to 70°C, and then the content was matured for one hour at the same temperature to obtain 716 g of a 60% by mass polyethylene oxide added polyamide polyamine aqueous solution (Compound B8; the weight-average molecular weight was 2,500).

The compositions of the gypsum raw materials used in a performance test are shown in Table 1.

The gypsum dispersants of Examples 1 to 51 and Comparative Examples 1 to 3 were prepared at the composition ratios shown in Table 2, and dispersibility of gypsum and delay of gypsum curing were tested by the method described below.

**Table 1 Calcined Gypsum Mixing Ratio (mass%)**

| No. | Natural | Flue Gas Desulfurization | Other By-product (Containing Recycled Gypsum) |
|---|---|---|---|
| 1 | 55 | 25 | 20 |
| 2 | 45 | 30 | 25 |
| 3 | 35 | 30 | 35 |
| 4 | 25 | 30 | 45 |
| 5 | 25 | 40 | 35 |

As calcined gypsum of No. 6, commercially available Cherry Mark calcined gypsum A-grade manufactured by YOSHINO GYPSUM Co., Ltd. was used.

### [Performance Test]

### <Dispersibility of Gypsum>

The component (A) and the component (B) were mixed at each of the mixing ratios (mass ratios) as shown in Table 2 (Tables 2-1 and 2-2) to prepare gypsum dispersants of Examples 1 to 51 and Comparative Examples 1 to 3 as follows: 0.18 g of each of the dispersants was weighed based on a solid content (to gypsum, 0.06% by mass), and water was added thereto as kneading water so that the total amount was adjusted to 195 g. To the mixture, 300 g of calcined gypsum having a mixing composition shown in Table 1 or of a commercially available calcined gypsum (No. 6) was added (65% of a water/gypsum ratio), and the resultant mixture was kneaded in a small juicer/blender for 10 seconds.

At the center of an urethane board (35 cm × 35 cm), a hollow cylinder having an upper inner diameter of 75 mm, a lower inner diameter of 85 mm, and a height of 40 mm was prepared in advance, and the kneaded gypsum slurry was immediately poured into a container (hollow cylinder) until the container became full. Then, the hollow cylinder was pulled up to the direction perpendicular to the urethane board, and the spread of the gypsum slurry was measured. A first diameter that may represent the maximum spread and a second diameter perpendicular to the first diameter were measured, and an average value thereof was evaluated as an index of dispersibility.

The obtained results (average values of diameters) are shown in Table 2 (Tables 2-1 and 2-2).

### <Delay of Gypsum Curing>

Similarly to the dispersibility test, 0.18 g of each of the gypsum dispersants of Examples 1 to 51 and Comparative Examples 1 to 3 was accurately weighed based on a solid content (to gypsum, 0.06% by mass), and kneading water was added thereto so that the total amount was adjusted to 195 g. To the mixture, 300 g of calcined gypsum having a mixing composition shown in Table 1 or of a commercially available calcined gypsum (No. 6) was added (65% of a water/gypsum ratio), and the resultant mixture was kneaded in a small juicer/blender for 10 seconds.

After kneading, the prepared gypsum slurry was immediately transferred in a paper cup, and a digital thermometer was placed therein, in order to measure a temperature according to exothermic heat resulting from curing of gypsum, every ten seconds. The time spent to reach the maximum temperature was identified as the time for the peak temperature, and was used as an index to evaluate delay of curing.

The obtained results (time for the peak temperatures) are shown in Table 2 (Tables 2-1 and 2-2).

**Table 2-1 Evaluation Result of Dispersibility and Curability**

| Example No. | A | B | A:B*¹ | Dispersibility (mm)*² | | | | | | Curability*² | | | | | |
|---|---|---|---|---|---|---|---|---|---|---|---|---|---|---|---|
| | | | | 1 | 2 | 3 | 4 | 5 | 6 | 1 | 2 | 3 | 4 | 5 | 6 |
| 1 | A1 | B1 | 1:1 | 174 | 175 | 176 | 177 | 177 | 177 | 14'40" | 14'50" | 14'30" | 14'20" | 14'30" | 28'10" |
| 2 | | | 5:1 | 180 | 184 | 186 | 191 | 191 | 193 | 14'20" | 14'10" | 13'40" | 13'10" | 13'40" | 28'00" |
| 3 | | | 10:1 | 176 | 179 | 182 | 188 | 191 | 194 | 14'20" | 14'20" | 14'00" | 13'50" | 14'10" | 28'10" |
| 4 | | | 30:1 | 179 | 182 | 186 | 192 | 192 | 198 | 15'20" | 15'20" | 14'50" | 14'30" | 15'00" | 28'30" |
| 5 | | B2 | 1:1 | 174 | 174 | 177 | 179 | 176 | 178 | 14'40" | 14'10" | 14'20" | 14'00" | 14'20" | 28'00" |
| 6 | | | 5:1 | 183 | 188 | 191 | 195 | 189 | 195 | 14'20" | 13'50" | 13'30" | 13'00" | 13'40" | 28'10" |
| 7 | | | 10:1 | 180 | 183 | 186 | 190 | 189 | 194 | 14'10" | 13'30" | 13'40" | 13'20" | 13'30" | 27'40" |
| 8 | | | 30:1 | 184 | 187 | 190 | 197 | 194 | 198 | 15'30" | 14'50" | 14'40" | 14'20" | 14'30" | 28'20" |
| 9 | | B3 | 1:1 | 176 | 178 | 180 | 181 | 180 | 180 | 14'40" | 14'40" | 14'30" | 14'00" | 14'10" | 28'00" |
| 10 | | | 5:1 | 182 | 185 | 189 | 194 | 189 | 196 | 14'40" | 14'30" | 14'10" | 13'40" | 14'00" | 27'50" |
| 11 | | | 10:1 | 181 | 184 | 193 | 197 | 193 | 197 | 14'20" | 14'00" | 13'30" | 13'20" | 13'50" | 27'50" |
| 12 | | | 30:1 | 182 | 186 | 190 | 196 | 195 | 198 | 15'50" | 15'30" | 15'30" | 14'40" | 14'50" | 28'10" |
| 13 | | B4 | 1:1 | 177 | 179 | 180 | 181 | 181 | 182 | 14'10" | 14'00" | 13'40" | 13'10" | 13'30" | 27'50" |
| 14 | | | 5:1 | 182 | 186 | 192 | 194 | 194 | 196 | 14'20" | 14'00" | 13'30" | 13'20" | 13'40" | 27'40" |
| 15 | | | 10:1 | 181 | 189 | 190 | 194 | 192 | 198 | 14'30" | 13'40" | 13'30" | 13'00" | 13'10" | 28'00" |
| 16 | | | 30:1 | 183 | 188 | 195 | 199 | 198 | 200 | 15'20" | 14'50" | 14'40" | 14'10" | 14'20" | 28'20" |
| 17 | | B5 | 1:1 | 177 | 181 | 182 | 183 | 183 | 185 | 14'40" | 14'20" | 14'20" | 14'00" | 13'50" | 27'40" |
| 18 | | | 5:1 | 179 | 183 | 187 | 194 | 192 | 195 | 14'30" | 14'10" | 14'10" | 13'30" | 13'50" | 28'00" |
| 19 | | | 10:1 | 180 | 186 | 191 | 195 | 193 | 197 | 14'30" | 14'00" | 13'40" | 13'30" | 13'10" | 28'10" |
| 20 | | | 30:1 | 181 | 185 | 189 | 193 | 194 | 199 | 15'30" | 15'00" | 14'30" | 14'00" | 14'50" | 28'10" |
| 21 | | B6 | 1:1 | 177 | 179 | 182 | 183 | 180 | 182 | 14'20" | 14'10" | 14'00" | 13'30" | 13'40" | 27'40" |
| 22 | | | 5:1 | 178 | 188 | 190 | 195 | 196 | 196 | 14'00" | 13'50" | 13'30" | 13'10" | 13'20" | 27'30" |
| 23 | | | 10:1 | 180 | 188 | 193 | 197 | 195 | 199 | 14'10" | 13'40" | 13'30" | 13'20" | 13'50" | 28'20" |
| 24 | | | 30:1 | 179 | 184 | 190 | 195 | 194 | 198 | 15'00" | 14'40" | 14'20" | 14'00" | 14'20" | 28'30" |

| | | | | | | | | | | | | | | | |
|---|---|---|---|---|---|---|---|---|---|---|---|---|---|---|---|
| *1 Mass ratio *2 The numbers 1 to 6 in the columns of Dispersibility and Curability refer to the numbers of calcined gypsum used (see Table 1 and the like). | | | | | | | | | | | | | | | |

**Table 2-2 Evaluation Result of Dispersibility and Curability**

| Example No. | A | B | A:B*¹ | Dispersibility (mm)*² | | | | | | Curability*² | | | | | |
|---|---|---|---|---|---|---|---|---|---|---|---|---|---|---|---|
| | | | | 1 | 2 | 3 | 4 | 5 | 6 | 1 | 2 | 3 | 4 | 5 | 6 |
| 25 | A1 | B7 | 1:1 | 175 | 177 | 176 | 179 | 178 | 179 | 14'50" | 14'30" | 14'20" | 14'00" | 14'40" | 27'30" |
| 26 | | | 5:1 | 178 | 187 | 188 | 192 | 190 | 192 | 14'50" | 14'30" | 14'00" | 13'40" | 14'10" | 27'40" |
| 27 | | | 10:1 | 182 | 186 | 189 | 195 | 193 | 196 | 14'40" | 14'50" | 14'20" | 13'50" | 13'50" | 27'50" |
| 28 | | | 30:1 | 181 | 184 | 185 | 194 | 192 | 198 | 15'50" | 15'00" | 14'50" | 14'20" | 14'30" | 28'20" |
| 29 | | B8 | 1:1 | 177 | 178 | 182 | 183 | 181 | 183 | 14'50" | 14'20" | 14'10" | 13'30" | 14'00" | 27'30" |
| 30 | | | 5:1 | 184 | 186 | 189 | 193 | 193 | 196 | 14'20" | 14'00" | 13'50" | 13'20" | 14'00" | 27'20" |
| 31 | | | 10:1 | 181 | 183 | 188 | 192 | 192 | 196 | 14'00" | 13'40" | 14'00" | 13'40" | 14'30" | 27'40" |
| 32 | | | 30:1 | 180 | 182 | 185 | 190 | 194 | 198 | 15'20" | 15'00" | 15'00" | 14'20" | 14'30" | 28'00" |
| 33 | A2 | B1 | 5:1 | 190 | 196 | 201 | 205 | 200 | 209 | 14'10" | 13'50" | 13'30" | 13'20" | 13'20" | 27'00" |
| 34 | | B2 | | 192 | 199 | 203 | 207 | 205 | 213 | 14'20" | 14'00" | 14'00" | 13'40" | 13'50" | 26'30" |
| 35 | | B3 | | 189 | 200 | 201 | 205 | 206 | 210 | 14'20" | 14'00" | 13'40" | 13'30" | 13'30" | 26'50" |
| 36 | | B4 | | 190 | 200 | 203 | 207 | 205 | 211 | 14'00" | 13'50" | 13'40" | 13'20" | 13'20" | 26'50" |
| 37 | | B5 | | 190 | 198 | 204 | 210 | 205 | 213 | 14'00" | 13'40" | 13'30" | 13'30" | 13'40" | 26'30" |
| 38 | | B6 | | 188 | 196 | 203 | 207 | 204 | 212 | 13'50" | 13'40" | 13'30" | 13'20" | 13'40" | 26'20" |
| 39 | | B7 | | 187 | 193 | 193 | 199 | 198 | 208 | 14'20" | 14'10" | 14'00" | 13'40" | 133'50" | 26'50" |
| 40 | | B8 | | 188 | 191 | 194 | 196 | 200 | 209 | 14'00" | 13'30" | 13'30" | 13'10" | 13'30" | 26'40" |
| 44 | A3 | B1 | | 185 | 191 | 196 | 198 | 195 | 200 | 15'00" | 14'40" | 14'30" | 14'00" | 14'20" | 28'30" |
| 45 | | B2 | | 191 | 192 | 198 | 199 | 197 | 203 | 15'00" | 14'20" | 14'00" | 13'40" | 13'50" | 28'20" |
| 46 | | B3 | | 188 | 189 | 195 | 196 | 197 | 201 | 15'20" | 15'00" | 14'40" | 14'20" | 14'30" | 28'00" |
| 47 | | B4 | | 190 | 192 | 196 | 199 | 198 | 202 | 14'50" | 14'50" | 14'20" | 14'00" | 14'20" | 28'00" |
| 48 | | B5 | | 192 | 195 | 198 | 198 | 196 | 203 | 14'50" | 14'20" | 14'00" | 13'30" | 13'40" | 27'40" |
| 49 | | B6 | | 190 | 197 | 198 | 203 | 200 | 205 | 14'50" | 14'30" | 13'40" | 13'20" | 13'20" | 27'30" |
| 50 | | B7 | | 188 | 192 | 195 | 200 | 198 | 200 | 15'00" | 15'00" | 14'40" | 14'30" | 14'30" | 27'50" |
| 51 | | B8 | | 192 | 195 | 198 | 202 | 201 | 203 | 14'50" | 14'40" | 14'20" | 14'30" | 14'50" | 27'40" |
| Comparative Example 1 | A1 | - | - | 135 | 138 | 143 | 147 | 145 | 200 | 16'40" | 16'30" | 16'20" | 15'50" | 16'00" | 28'30" |
| Comparative Example 2 | A2 | - | - | 145 | 148 | 153 | 155 | 157 | 215 | 15'30" | 15'10" | 15'00" | 15'00" | 15'10" | 27'30" |
| Comparative Example 3 | A3 | - | - | 150 | 152 | 156 | 157 | 156 | 208 | 16'30" | 16'30" | 16'00" | 15'40" | 15'50" | 28'50" |

| | | | | | | | | | | | | | | | |
|---|---|---|---|---|---|---|---|---|---|---|---|---|---|---|---|
| *1 Mass ratio *2 The numbers 1 to 6 in the columns of Dispersibility and Curability refer to the numbers of calcined gypsum used (see Table 1 and the like). | | | | | | | | | | | | | | | |

As shown in Table 2 (Tables 2-1 and 2-2), gypsum slurry to which each of the gypsum dispersants of Examples 1 to 51 was added showed excellent dispersibility and reduced delay of curing, even if the gypsum raw materials used are different in quality.

On the other hand, although some of the gypsum dispersants of Comparative Examples 1 to 3, which contain no polyamide polyamine, showed results comparable to those of Examples when commercially available calcined gypsum No. 6 was used, both dispersibility and delay of curing were inferior compared to the examples in the use of the calcined gypsum of No. 1 to No. 5, which reflect actual gypsum blending performed in factories for manufacturing gypsum boards.

## Claims

1. A gypsum dispersant, **characterized by** comprising:
(A) a polycarboxylic acid polymer; and
(B) a polyamide polyamine obtained by a reaction of a polyalkylene polyamine and a dibasic acid as essential components, and/or an alkylene oxide adduct of the polyamide polyamine.

2. The gypsum dispersant according to claim 1, wherein
(A) the polycarboxylic acid polymer includes a structural unit derived from (a) a polyalkylene glycol unsaturated monomer and a structural unit derived from (b) an unsaturated carboxylic acid monomer.

3. The gypsum dispersant according to claim 2, wherein
the structural unit derived from (a) the polyalkylene glycol unsaturated monomer is represented by General Formula (1): 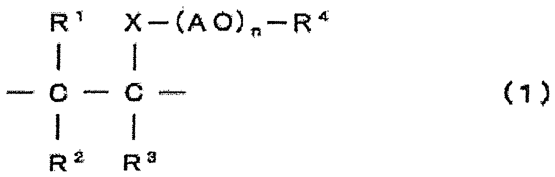 (where each of R¹, R², R³, and R⁴ is independently a hydrogen atom or a C₁₋₂₂ hydrocarbon group, X is -COO- or -(CH₂)ₐO-, a is an integer of 1 to 20, AO is a C₂₋₄ alkylene oxy group, and n is the number of moles of added alkylene oxy groups and is 1 to 200).

4. The gypsum dispersant according to any one of claims 1 to 3, wherein
the ratio of the component (A) and the component (B) is (A): (B) = 1 : 1 to 30 : 1, as a mass ratio.

5. A gypsum additive comprising:
a polyamide polyamine obtained by a reaction of a polyalkylene polyamine and a dibasic acid as essential components, and/or an alkylene oxide adduct of the polyamide polyamine.
